# EUROPÄISCHE PATENTSCHRIFT

(11) **EP 1 471 314 B1**
(45) Veröffentlichungstag und Bekanntmachung des Hinweises auf die Patenterteilung: **16.05.2018**
(21) Anmeldenummer: 04006786.0
(22) Anmeldetag: 22.03.2004
(51) Int. Cl.: F24F 13/14, B60H 1/00

(54) **Vorrichtung zur Begrenzung eines axialen Spiels**
Device for limiting the axial play
Dispositif pour limiter le jeu axial

(30) Priorität: 22.04.2003 DE 10318274
(43) Veröffentlichungstag der Anmeldung: 27.10.2004
(73) Patentinhaber: MAHLE Behr GmbH & Co. KG, 70469 Stuttgart (DE)
(72) Erfinder: Komarek, Eugen, 69126 Heidelberg (DE); Kroll, Bernd, 71691 Freiberg (DE); Rose, Wolfgang, 24379 Kappeln (DE); Schulten, Otto, 75428 Illingen (DE)
(74) Vertreter: Grauel, Andreas

(56) Entgegenhaltungen:
- EP-A- 0 475 034
- DE-A- 3 818 565
- DE-U- 8 013 350
- DE-U- 8 512 778
- DE-U- 29 913 436

## Beschreibung

Die Erfindung betrifft eine Vorrichtung zur Begrenzung eines axialen Spiels, insbesondere von in Gehäusen angebrachten Klappen, insbesondere bei einer Lüftungseinrichtung eines Kraftfahrzeugs, gemäß dem Oberbegriff von Anspruch 1.

Zur Vermeidung von in Folge eines axialen Spiels auftretenden Klappergeräuschen ist die Verwendung von Schichten aus einem elastischen Material, beispielsweise aufgeklebtem geschäumtem Material, bekannt. Ferner sind angespritzte Gummikomponenten bekannt. Die Fertigung ist jedoch relativ aufwändig.

Aus der DE 299 13 436 U1 ist eine Vorrichtung mit schwenkbaren streifenartigen Klappen für eine Lüftungsöffnung bekannt, die in einem Rahmen angeordnet sind. Hierbei weist jede Klappe auf zwei gegenüberliegenden Schmalseiten wegragende Scharnierstifte auf, die in entsprechend ausgestalteten Einformungen des Rahmens gelagert sind. Dabei ragt mindestens an einer Schmalseite der Klappe ein axial federnd ausgebildeter Scharnierstift einer Feder parallel zu der bzw. den Längskanten der Klappe ab. Dabei weist der Scharnierstift eine Biegung auf, welche die Federkraft zur Verfügung stellt. Eine derartige Vorrichtung lässt noch Wünsche offen.

Die DE 38 18 565 A1 offenbart ein schwenkbares Leitelement für eine Klimaanlage, welches mittels Lagerzapfen drehbar gelagert ist.

Es ist Aufgabe der Erfindung, eine verbesserte Vorrichtung zur Begrenzung eines axialen Spiels zur Verfügung zu stellen, insbesondere eine Vorrichtung, die einstückig ausgebildet ist und zumindest im Bereich der Schwenkverbindung nur aus einem Material besteht.

Diese Aufgabe wird gelöst durch eine Vorrichtung zur Begrenzung eines axialen Spiels mit den Merkmalen des Anspruchs 1. Vorteilhafte Ausgestaltungen sind Gegenstand der Unteransprüche.

Erfindungsgemäß ist eine Vorrichtung zur Begrenzung eines axialen Spiels von einer an einem Gehäuse anbringbaren Klappe aus Kunststoff, insbesondere einer Lüftungseinrichtung eines Kraftfahrzeugs, mit zwei Zapfen, welche eine Schwenkachse bilden und in dem Gehäuse lagerbar sind, vorgesehen bei der quer zur Schwenkachse an mindestens einem Ende der Klappe ein oder mehrere einstückig mit der Klappe gespritzte Federarme vorgesehen sind. Hierbei besteht die gesamte Klappe, das heißt einschließlich des Federarms, bevorzugt aus dem gleichen Material, und wird in einem Arbeitsgang spritzgegossen.

Gemäß einer bevorzugten Ausführungsform steht der Federarm im entlasteten Zustand senkrecht zur Schwenkachse ab. Hierbei hat der Federarm an seinem äußeren Ende einen in Verlängerung der Schwenkachse von der Klappe wegzeigenden Vorsprung, der bevorzugt abgerundet, insbesondere halbkugelförmig, ausgebildet ist.

Alternativ ist eine geneigte Anordnung des Federarms möglich, wobei der Federarm im entlasteten Zustand bezüglich der Senkrechten zur Schwenkachse in Richtung derselben leicht nach außen geneigt ausgebildet ist. Der Federarm muss hierbei nicht notwendigerweise eine gerade Gestalt aufweisen, sondern kann vielmehr auch gebogen ausgebildet sein, wodurch, wie auch durch den Winkel in dem der Federarm angeordnet ist, der Verlauf der entsprechenden Federkennlinie wunschgemäß beeinflusst werden kann.

Vorzugsweise sind zwei Federarme um 180° versetzt zueinander angeordnet, insbesondere in der Ebene der Klappe. Es sind auch mehr als zwei Federarme möglich, die gleichmäßig verteilt angeordnet sind. Dies ermöglicht eine gleichmäßige Kraftverteilung und verbessert die Zentrierung.

Bevorzugt ist der Federarm in einen Anschlag integriert, der zur Begrenzung des maximalen axialen Spiels der Klappe im Gehäuse dient und der in einer Ebene senkrecht zu Schwenkachse angeordnet ist. Der Anschlag ist hierbei bevorzugt scheibenförmig ausgebildet. Hierbei können im Anschlag nutartige Aussparungen ausgebildet sein, in denen der Federarm verläuft. Er kann aber auch am äußeren Ende des Anschlags angeordnet sein.

Der Federarm ist erfindungsgemäß U-förmig ausgebildet, wobei vorzugsweise zumindest einer der beiden Schenkel im entlasteten Zustand senkrecht zur Schwenkachse angeordnet ist.

Diese Ausgestaltung, bei welcher der Federarm direkt den Zapfen trägt, hat den Vorteil einer einfacheren Montage.

Im Folgenden wird die Erfindung anhand mehrerer Ausführungsbeispiele unter Bezugnahme auf die Zeichnung im Einzelnen erläutert. In der Zeichnung zeigen:
- Fig. 1: eine Klappe mit drei Vorrichtungen, wobei aus der in Fig. 1 dargestellten Perspektive nur die Vorrichtungen gemäß einem ersten und zweiten Beispiel ersichtlich sind, bei denen es sich nicht um Ausführungsformen der Erfindung handelt,
- Fig. 2: eine andere Perspektive der Klappe von Fig. 1, bei der alle drei Beispiele ersichtlich sind, bei denen es sich nicht um Ausführungsformen der Erfindung handelt,
- Fig. 3: einen Schnitt durch die beiden Vorrichtungen gemäß dem zweiten und dritten Beispiel von Fig. 1 und 2, und
- Fig. 4: ein Ausführungsbeispiel der Erfindung aus vier unterschiedlichen Perspektiven, wobei die mit A-A gekennzeichnete Darstellung einen Schnitt quer durch die darunter dargestellte Darstellung entlang der Linie A-A zeigt.

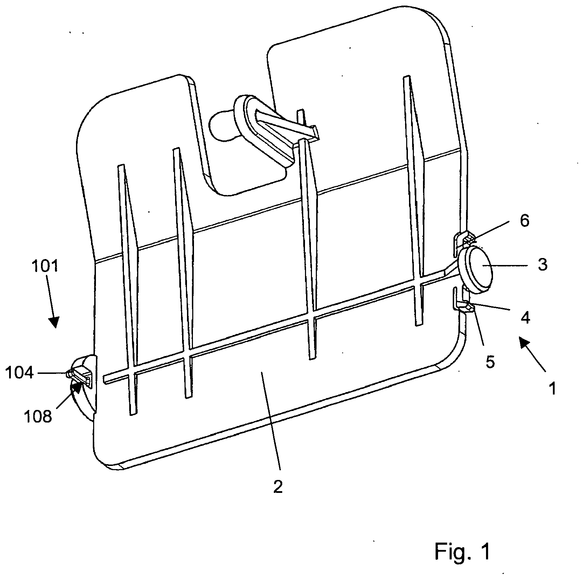

Eine Vorrichtung 1 gemäß dem ersten Beispiel zur Begrenzung eines axialen Spiels von einer an einem Gehäuse anbringbaren Klappe 2 aus Kunststoff ist in Fig. 1 rechts dargestellt. Sie ist Teil einer Lüftungseinrichtung eines Kraftfahrzeugs. Die Klappe 2 ist um eine durch zwei Zapfen 3 gebildete Schwenkachse schwenkbar, wobei an dieser Stelle nur auf den in Fig. 1 rechts dargestellten Zapfen 3 eingegangen werden soll. Der Zapfen 3 hat vorliegend eine im Wesentlichen scheibenförmige Gestalt, wobei Verstärkungsstege zur Erhöhung der Stabilität vorgesehen sind, welche gemäß dem vorliegenden Beispiel über annähernd die gesamte Länge der Schwenkachse der Klappe 2 verlaufen.

Hierbei sind zwei 180° zueinander versetzt ausgebildete, einstückig mit der Klappe 2 gespritzte Federarme 4 vorgesehen, wobei die beiden Federarme 4 in der Ebene der Klappe 2 angeordnet sind. Die beiden Federarme 4 erstrecken sich senkrecht zur Schwenkachse und haben an ihren von der Schwenkachse abgewandten Enden je einen Vorsprung 5. Die beiden Federarme 4 sind gemäß diesem Beispiel durch Schlitze 6 vom weiteren Körper der Klappe 2 getrennt und haben eine im Wesentlichen gleichbleibende Dicke, welche derjenigen der Klappe 2 entspricht. Die Vorsprünge 5 sind, wie aus Fig. 1 ersichtlich, abgerundet.

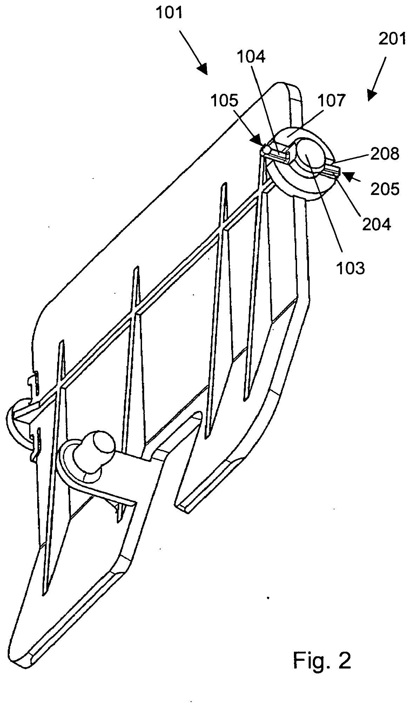

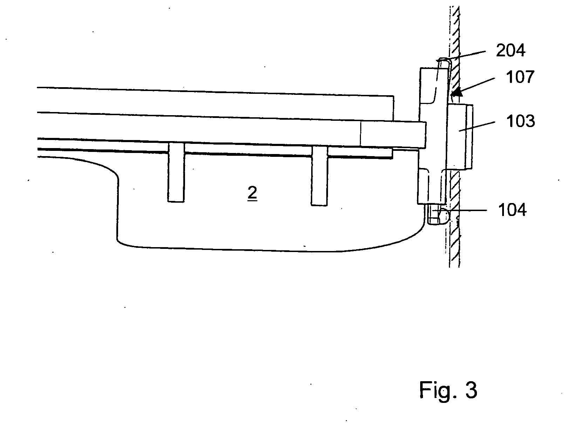

Unter Bezugnahme auf die linke Seite der Fig. 1, die rechte Vorderseite von Fig. 2 und Fig. 3 unten wird im Folgenden ein zweites Beispiel näher erläutert. Hierbei sind gleiche oder gleichwirkende Elemente der Vorrichtung zur Begrenzung eines axialen Spiels mit um 100 höheren Bezugszeichen als beim ersten Beispiel bezeichnet. Die Vorrichtung 101 zur Begrenzung eines axialen Spiels weist einen in axialer Richtung hinter dem Zapfen 103 angeordneten im Wesentlichen scheibenförmigen Anschlag 107 auf. Hierbei ist, in Fig. 2 vorne dargestellt, eine Aussparung 108 vorgesehen, durch welche ein Federarm 104 sich in radialer Richtung, im entlasteten Zustand senkrecht zur Schwenkachse nach außen erstreckt. Der Federarm 104 weist an seinem äußeren Ende einen Vorsprung 105 auf, welcher sich in Schwenkachsenrichtung zum Gehäuse hin erstreckt, wie insbesondere aus Fig. 3 ersichtlich ist. Der Vorsprung 105 ist kugelförmig abgerundet. Der gesamte Federarm 104 ist, wie die Federarme 4 des ersten Beispiels, einstückig mit und aus dem gleichen Material wie die Klappe 2 mittels Spritzgießen gefertigt.

Im Folgenden wird ein drittes Beispiel näher erläutert. Hierbei sind gleiche oder gleichwirkende Elemente der Vorrichtung zur Begrenzung eines axialen Spiels mit um 200 höheren Bezugszeichen als beim ersten Beispiel bezeichnet, wobei Elemente, die bereits bei der Beschreibung des zweiten Beispiels beschrieben wurden, keine neuen Bezugszeichen erhalten. Wie in Fig. 2 rechts hinten und in Fig. 3 oben dargestellt, ist an dem scheibenförmigen Anschlag 107 als drittes Beispiel ein zweiter Federarm 204 vorgesehen. Hierfür weist der scheibenförmige Anschlag 107 eine Aussparung 208 auf, durch welche der Federarm 204 in einer radialen, leicht in Längsrichtung der Schwenkachse zum Gehäuse hin geneigten Stellung über die Abmessungen des scheibenförmigen Anschlags 107 nach außen ragt. Bei diesem Federarm 204 gemäß dem dritten Beispiel wird auf Grund seiner geneigten Anordnung ein Vorsprung 205 durch sein Äußeres, am weitesten in axialer Richtung von der Klappe 2 beabstandetes Ende gebildet, welches in Anlage, an das Gehäuse gelangt und die Klappe 2 federnd vorspannt.

Die maximal zulässige Auslenkung des Federarms 204 ist gemäß dem vorliegenden Beispiel etwas größer als der vom Anschlag 107 begrenzte Weg (siehe Fig. 3). Auf Grund der Federkennlinie des Federarms 204 ist die Federkraft bei maximaler Auslenkung am größten, so dass die Klappe 2 bei an beiden Seiten der Klappe 2 angebrachten Federarmen 204 zentriert wird. Im Falle einer vertikalen Anordnung der Schwenkachse können oben angeordnete Federarme 204 auf Grund der Wirkung der Schwerkraft gegebenenfalls auch entfallen, die dämpfende Wirkung der Federarme 204 ist aber besser wenn die Federarme 204 beidseitig angeordnet sind.

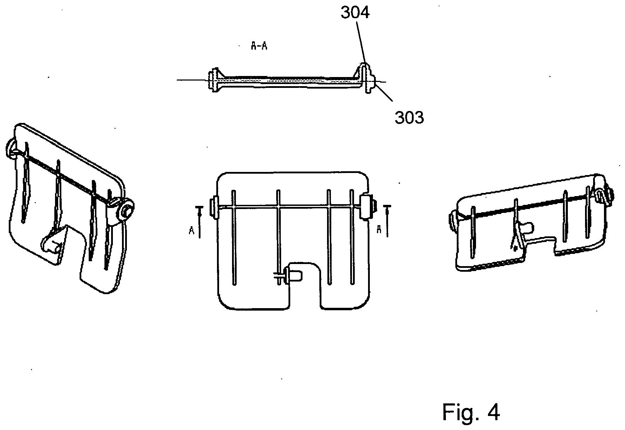

Gemäß dem in Fig. 4 aus verschiedenen Perspektiven dargestellten Ausführungsbeispielen ist an der Klappe auf einer Seite der Schwenkachse ein Federarm 304 vorgesehen. Dieser Federarm 304 ist, wie am besten aus der geschnittenen Darstellung ersichtlich ist, U-förmig ausgebildet, so dass der Verlauf der Klappe im Bereich der Schwenkachse, welche der Schnittlinie entspricht, unterbrochen ist. Hierbei ist ein Zapfen 303 an der Außenseite des von der Klappe abgewandten Schenkels des U-förmigen Federarms 304 einstückig mit demselben ausgebildet.

Zur Verhinderung eines Axialspiels wird in der Grundauslegung das Lager maß mit einem gewissen Übermaß ausgebildet, so dass die beiden Schenkel des Federarms 304 in jedem Fall etwas zusammengedrückt werden und auf diese Weise seine Federkraft wirksam wird.

Die Anordnung des Federarms 304 muss nicht notwendigerweise in der Ausrichtung erfolgen, wie in Fig. 4 dargestellt, sondern der Bügel, d.h. der bogenförmige Bereich des U-förmigen Federarms, kann auch in einer beliebigen anderen um die Schwenkachse gedrehten Position angeordnet sein, insbesondere 90° gedreht hierzu. Ferner ist die Anbringung je eines U-förmigen Federarms auf beiden Seiten der Klappe möglich.

### Bezugszeichenliste

1, 101, 201 Vorrichtung
2 Klappe
3, 103, 303 Zapfen
4, 104, 204, 304 Federarm
5, 105, 205 Vorsprung
6 Schlitz
107 Anschlag
108, 208 Aussparung

## Patentansprüche

1. Vorrichtung zur Begrenzung eines axialen Spiels von einer an einem Gehäuse anbringbaren Klappe (2) aus Kunststoff, insbesondere einer Lüftungseinrichtung eines Kraftfahrzeugs, mit zwei Zapfen (303), welche eine Schwenkachse bilden und in dem Gehäuse lagerbar sind, wobei quer zur Schwenkachse an mindestens einem Ende der Klappe (2) ein einstückig mit der Klappe (2), ausgebildeter Federarm (304) vorgesehen ist **dadurch gekennzeichnet, dass**, der Federarm (304) U-förmig ausgebildet ist und ein Zapfen (303) an der Außenseite des von der Klappe abgewandten Schenkels des U-förmigen Federarms (304) einstückig mit demselben ausgebildet ist.

2. Vorrichtung nach Anspruch 1, **dadurch gekennzeichnet, dass** der Federarm (304) im entlasteten Zustand leicht bezüglich der Senkrechten zur Schwenkachse in Richtung derselben nach außen geneigt oder entsprechend gebogen ausgebildet ist.

3. Vorrichtung nach einem der Ansprüche 1 oder 2, **dadurch gekennzeichnet, dass** der Federarm (304) über seine gesamte Länge eine gleichbleibende Dicke aufweist.

4. Vorrichtung nach einem der vorhergehenden Ansprüche, **dadurch gekennzeichnet, dass** zwei oder mehr Federarme(304) gleichmäßig versetzt zueinander angeordnet sind.

5. Vorrichtung nach einem der vorhergehenden Ansprüche, **dadurch gekennzeichnet, dass** der Federarm (304) in einen Anschlag integriert ist, der zur Begrenzung des maximalen axialen Spiels der Klappe (2) im Gehäuse dient und der in einer Ebene senkrecht zu Schwenkachse angeordnet ist.

6. Vorrichtung nach Anspruch 5, **dadurch gekennzeichnet, dass** der Anschlag scheibenförmig ausgebildet ist.

7. Vorrichtung nach einem der vorhergehenden Ansprüche, **dadurch gekennzeichnet, dass** mindestens ein Schenkel des U-förmigen Federarms (304) im entlasteten Zustand senkrecht zur Schwenkachse angeordnet ist.

## Claims

1. An arrangement for limiting an axial play of a flap (2) made of plastic which can be attached to a housing, in particular a ventilation device of a motor vehicle, having two pins (303) which form a pivot axis and can be stored inside the housing, wherein, transversely to the pivot axis, on at least one end of the flap (2), a spring arm (304) which is formed integrally with the flap (2) is provided, **characterised in that** the spring arm (304) is U-shaped and, on the outside of the leg of the U-shaped spring arm (304) facing away from the flap, a pin (303) is formed integrally with the same.

2. The arrangement according to claim 1, **characterised in that**, in the relaxed condition, the spring arm (304) is slightly tilted to the outside with regard to the perpendicular to the pivot axis in the direction of the same or is bent correspondingly.

3. The arrangement according to one of claims 1 or 2, **characterised in that** the spring arm (304) has a constant thickness across its entire length.

4. The arrangement according to one of the preceding claims, **characterised in that** two or more spring arms (304) are arranged in a regularly offset manner with regard to one another.

5. The arrangement according to one of the preceding claims, **characterised in that** the spring arm (304) is integrated in a stop which serves to limit the maximum axial play of the flap (2) inside the housing and which is arranged in a plane perpendicular to the pivot axis.

6. The arrangement according to claim 5, **characterised in that** the stop is disc-shaped.

7. The arrangement according to one of the preceding claims, **characterised in that** at least one leg of the U-shaped spring arm (304) is arranged perpendicular to the pivot axis in the relaxed condition.

## Revendications

1. Dispositif pour limiter un jeu axial d'un volet (2) en matière plastique, en particulier d'un dispositif de ventilation d'un véhicule automobile, ledit volet pouvant être fixé sur un carter, ledit dispositif comprenant deux tourillons (303) qui forment un axe de pivotement et peuvent être montés dans le carter, où il est prévu un bras à ressort (304) formant une seule et même pièce avec le volet (2), ledit bras à ressort étant configuré sur au moins une extrémité du volet (2), transversalement par rapport à l'axe de pivotement, **caractérisé en ce que** le bras à ressort (304) est configuré en forme de U, et un tourillon (303) est configuré sur le côté extérieur de la branche du bras à ressort (304) en forme de U, ladite branche étant placée à l'opposé du volet, ledit tourillon formant une seule et même pièce avec ce même bras à ressort.

2. Dispositif selon la revendication 1, **caractérisé en ce que** le bras à ressort (304), à l'état détendu, est configuré, par rapport à la perpendiculaire à l'axe de pivotement, en étant légèrement incliné vers l'extérieur en direction dudit axe de pivotement, ou bien incurvé de façon correspondante.

3. Dispositif selon l'une des revendications 1 ou 2, **caractérisé en ce que** le bras à ressort (304) présente, sur la totalité de sa longueur, une épaisseur constante.

4. Dispositif selon l'une quelconque des revendications précédentes, **caractérisé en ce que** deux bras à ressort (304), ou plus, sont disposés en étant décalés de façon uniforme l'un par rapport à l'autre ou les uns par rapport aux autres.

5. Dispositif selon l'une quelconque des revendications précédentes, **caractérisé en ce que** le bras à ressort (304) est intégré dans une butée qui sert à la limitation du jeu axial maximum du volet (2) dans le carter et qui est disposée dans un plan perpendiculaire à l'axe de pivotement.

6. Dispositif selon la revendication 5, **caractérisé en ce que** la butée est configurée en forme de disque.

7. Dispositif selon l'une quelconque des revendications précédentes, **caractérisé en ce qu'**au moins une branche du bras à ressort (304) en forme de U est disposée, à l'état détendu, perpendiculairement à l'axe de pivotement.
